# EUROPEAN PATENT SPECIFICATION

(11) **EP 2 923 559 B1**
(45) Date of publication and mention of the grant of the patent: **20.12.2017**
(21) Application number: 14425038.8
(22) Date of filing: 25.03.2014
(51) Int. Cl.: A01F 15/07, A01F 15/08

(54) **Agricultural machine**
Landwirtschaftliche Maschine
Machine agricole

(43) Date of publication of application: 30.09.2015
(73) Proprietor: Kverneland Group Ravenna S.r.l., 48026 Russi (RA) (IT)
(72) Inventor: Ravaglia, Paolo, 48012 Bagnacavallo RA (IT)
(74) Representative: Modiano, Micaela Nadia

(56) References cited:
- EP-A1- 2 630 857
- WO-A1-02/076183
- US-A- 3 974 632
- US-A- 4 176 596
- US-A1- 2002 121 200
- US-A1- 2005 045 051

## Description

The present invention relates to an agricultural machine.

As is known, nowadays there is a vast and highly diversified market for agricultural machines, which are designed to assist man (or replace him entirely) in the carrying out of agricultural work of all kinds.

In such context, a substantial slice of the market is occupied by apparatuses known as balers: this term is used to identify machines equipped with a drive unit (or towed by the latter) that enables them to move along a swath of cut material, such as grass, forage or straw, which is to be gathered by way of adapted contrivances.

Balers are thus provided with automatic devices for transferring the gathered agricultural products to a compression chamber, arranged at the rear, which is in turn provided with elements (rollers, belts or catenaries), which are arranged along the perimeter of the inner compartment of the chamber and entrain the product itself, thus enabling the formation of the bale.

Among the various different agricultural machines that come under the category described above, a significant subgroup is certainly represented by roto-balers, in whose chamber (usually cylindrical) a bale is formed which is in turn substantially cylindrical.

According to conventional methods, the compression chamber of roto-balers is divided into two parts (be they of the type known as fixed-chamber or of the type known as variable-chamber): a first shell is in fact integral with the chassis of the machine and is completely open at the rear, where a sort of closing door operates. In more detail, the door can move from the first, closed configuration, in which it cooperates with the shell to delimit the chamber, to a second, discharging configuration, in which it allows the discharging of the bale onto the ground.

To this end, the door is articulated to the shell about a pivoting axis that is arranged on the top of the latter (at the rear side). Thus, in the transition from the first configuration to the second, the door itself can rotate and be raised completely, in order to allow the discharging onto the ground of the bale.

Such implementation solution is not however devoid of drawbacks.

It should be noted first of all that the discharging operation described (which must naturally be completed with the subsequent re-lowering of the door, in order to restore the first configuration and the starting conditions of the cycle), requires an execution time that is non-negligible, and which appreciably influences the overall duration of the activity of making (and discharging) the bale.

While excellent results have been achieved in terms of optimization of the other steps of the cycle, and thus better performance has been achieved not only for the gathering and transfer of the agricultural products, but also for the formation and tying of the bale inside the chamber, the overall time is still currently strongly penalized by the need to wait for the slow movement of the door. In fact, the considerable size of the door, and thus the heavy masses that are made to rotate, impose strict upper limits on the possible speeds during raising and lowering.

By way of example, it should be noted that out of an average total time of approximately 60 seconds, for forming a bale, the discharging step alone requires approximately 18-20 seconds for its completion (this time is necessary in order to open the door, allow the bale to descend, and finally close the door again).

Another problem relating to the operation of opening and closing the door derives from the overall space occupation in terms of length (i.e. measured along the advancement direction) that the machine takes up during the operation. In fact, before closing the door again the bale must have exited completely, and in the meantime, with the door rotated and raised, the machine occupies a considerable space, such as to create considerable inconvenience in some situations.

It should also be noted that some of the roto-balers available on the market are fitted at the rear with a bale-wrapper (towed by the baler or directly integral with the chassis of the latter) which receives the formed bale, before its final discharging onto the ground, in order to wrap it with a film of polymeric material, if required, and without requiring the intervention of a further agricultural machine.

For such specific type of roto-baler, it is evident that the considerable occupation of space mentioned earlier is an even more particularly felt problem, causing problems with transferring the bale from the chamber to the deck of the bale-wrapper (making it necessary to adopt complex movement solutions) and furthermore a machine length that is decidedly significant.

Moreover, the overall length of the machine is a very important parameter, not just during the agricultural operations on the chosen terrain (for evident reasons of practicality and manageability), but also, and especially, when one considers that the machines that have both the compression chamber and the bale-wrapper on a single chassis often have to be transported on public roads, in order to reach the work area.

An excessive size of the machine (in terms of width and/or length) can thus make the transfer extremely complex, to the point where it becomes impossible if it exceeds the size limits imposed by the highway code.

Finally, it should be noted that in having to make the bale travel along swaths of cut material, in order to enable its discharging onto the ground, the agricultural machine imparts a violent thrust to the bale to expel it, which brings the risk of dangerously rolling downhill, if the baling operation is being carried out on sloping terrain.

US-A1-2002/121200 discloses a large round baler including a chassis having a front part defining a baling chamber. A first part of a discharge gate is pivoted to the chassis at a first bearing located at a rear, upper corner of each side of the chassis, and a second part of the discharge gate is pivoted at a second bearing located underneath and to the rear of the first bearing. In the closed configuration of the gate for forming a bale, the first gate part is in contact with the a rear edge of the chassis while the second gate part is located underneath the first gate part and extends under the chassis up to a crop pick up or recovery arrangement. Upon opening the discharge gate, a small angular displacement of the first gate part when being raised brings about a relatively large angular displacement of the second gate part, with the second gate part being arranged rearwardly of the first gate part.

WO-A1-02/076183 discloses a combined baler/bale wrapper comprising a chassis on which a baler and a bale wrapper are mounted. The baler comprises a stationary segment, a lower segment and an upper segment 11 of which carry bale forming rollers which define a bale forming chamber within which a round bale is formed. The lower segment and the upper segment are pivotal about first and second pivot axes, respectively from a bale forming position to a discharge position for transferring a bale upwardly rearwardly from of the bale forming chamber directly onto first and second bale supporting rollers of the bale wrapper. The bale supporting rollers rotate the bale about a first wrapping axis while a carrier ring simultaneously revolves a pair of wrapping material dispensers about a second horizontal wrapping axis for dispensing wrapping material onto the bale for wrapping thereof.

The aim of the present invention is to solve the above mentioned problems, by providing an agricultural machine that ensures a practical and easy discharging of the bale onto the ground.

Within this aim, an object of the invention is to provide an agricultural machine that makes it possible to discharge the formed bale onto the ground, in a short time.

Another object of the invention is to provide an agricultural machine that is capable of discharging the bale that has just been formed onto the ground, while having a contained space occupation, and in particular a contained length.

Another object of the invention is to provide an agricultural machine that is capable of discharging the bale that has just been formed onto the ground in conditions of absolute safety.

Another object of the invention is to provide an agricultural machine that can legally travel on urban and suburban roads.

Another object of the invention is to provide an agricultural machine that ensures a high reliability of operation.

Another object of the invention is to provide an agricultural machine that can be easily implemented using elements and materials that are readily available on the market.

Another object of the invention is to provide an agricultural machines that is low cost and safely applied.

In accordance with the invention, there is provided an agricultural machine as defined in the appended claims.

Further characteristics and advantages of the invention will become better apparent from the description of a preferred, but not exclusive, embodiment of the agricultural machine according to the invention, which is illustrated by way of non-limiting example in the accompanying drawings wherein:
Figures 1 and 2 are schematic side views of the agricultural machine according to the invention, in the first configuration, respectively at the start and at the end of the bale formation process;
Figure 3 schematically illustrates the machine according to the invention in the second configuration, with the bale discharged onto the ground.

With particular reference to the figures, the reference numeral 1 generally designates an agricultural machine that comprises a chassis for supporting an open shell 2a, which partially delimits a chamber 3 for accommodating and compressing agricultural products, of the type of grass, wheat, maize, hay, forage, and the like.

The above mentioned agricultural products, which usually are previously cut and distributed to form a swath along a stretch of agricultural land, can be picked up by way of an adapted pick-up drum 4 and transferred to the chamber 3 by way of conveying elements interposed between the chamber and the pick-up drum 4 itself.

According to methods that will be better described below, with reference to a possible embodiment of the agricultural machine 1 according to the invention, in the chamber 3 it is thus possible to obtain the formation of a bale A, to be subsequently discharged onto the ground (once completed).

In the preferred application, which will be repeatedly referred to in the present discussion, the agricultural machine 1 is thus of the type of roto-balers and the like, which are designed for the gathering of products like the ones mentioned above, for the formation of a bale A that is usually cylindrical.

The possibility is not ruled out moreover of adopting the solutions described herein in other types of agricultural balers, or in other agricultural machines 1, while remaining within the scope of protection claimed herein.

It should furthermore be noted that, in order to allow movement along the swath of cut material (or just to be able to reach the agricultural land), the agricultural machine 1 is preferably, but not exclusively, provided with wheels 5 and can be towed by a respective tractor by way of a tow bar 6.

Likewise, it is possible to provide agricultural machines 1 according to the invention that can move independently, in that they are provided with an engine and with a driving and control cab.

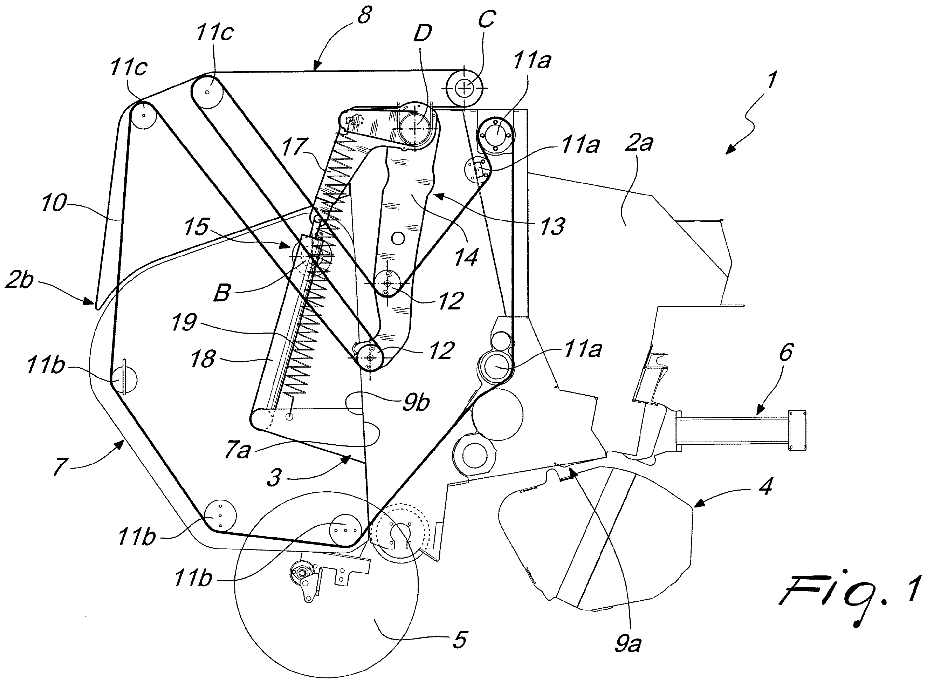

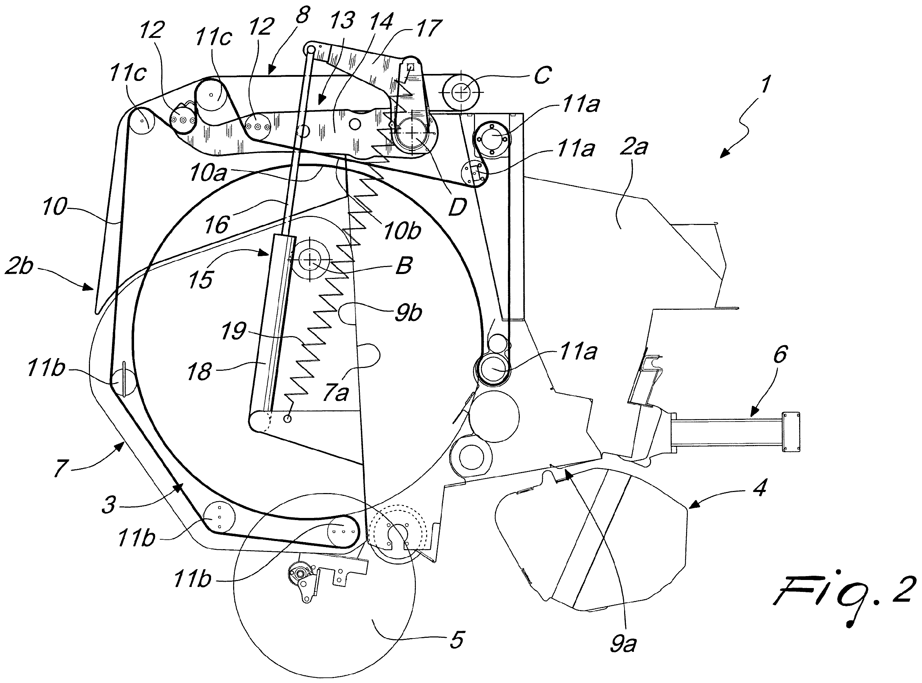

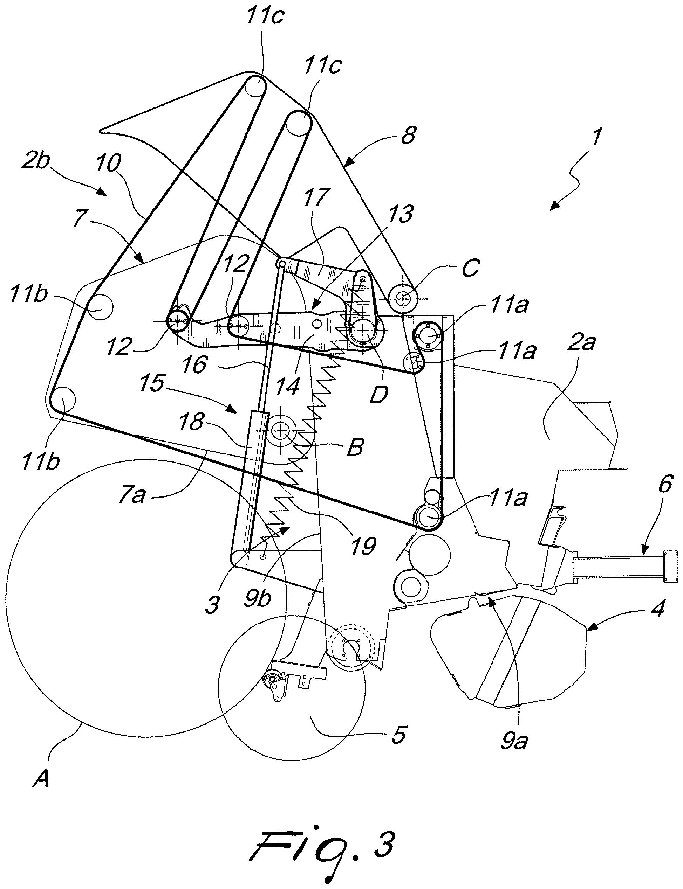

In any case, the shell 2a is associated with a closing apparatus 2b, which can move from a first configuration, in which it is shown in Figures 1 and 2, to a second configuration, in which it is shown in Figure 3, and vice versa.

In the first configuration, the closing apparatus 2b cooperates with the shell 2a to delimit and close (at least partially) the chamber 3, while in the second configuration, the closing apparatus 2b is arranged so as to allow the discharging of the bale A onto the ground.

According to the invention, the closing apparatus 2b comprises a first door 7 and a second door 8: the first door 7 is articulated to the shell 2a about a first pivoting axis B, while the second door 8 is articulated to the shell 2a about a second pivoting axis C, which is substantially parallel to the first axis B.

In the first configuration, as can clearly be seen in Figures 1 and 2, both of the doors 7, 8 (which are mutually contiguous) cooperate with the shell 2a for the delimitation and closure of the chamber 3, while in the second configuration both of the doors 7, 8 are rotated, in order to allow the discharge of the bale A onto the ground.

Thus, the agricultural machine 1 according to the invention in fact substitutes the single moving door, which is present in the conventional solutions, with a pair of doors 7, 8. Thanks to a suitable distribution of the doors 7, 8, of the respective pivoting axes B, C, and of the method of movement (as will be made clearer below), it is thus possible to appreciably reduce the inertial masses and the forces in play.

In particular, in fact, the first pivoting axis B is arranged at a vertical height that is intermediate, with respect to the vertical extension of the shell 2a, and is thus distanced from the top of the shell 2a and of the chamber 3.

In turn, the second door 8 is articulated to the shell 2a and rests on the top of the first door 7, so that it can be entrained in rotation by the latter.

More specifically, in the embodiment shown in the accompanying figures, for the purposes of non-limiting example, the second door 8 is articulated idle to the shell 2a, but different methods of rotatable coupling between the second door 8 and the shell 2a are not ruled out, while remaining within the scope of protection claimed herein.

In fact, compared to conventional solutions, the pivoting axis B about which the first door 7 rotates (and which is therefore also responsible for the movement of the second door 8) is lowered, with the possibility therefore of containing and reducing the size and the moment of inertia of the entire closing apparatus 2b, with respect to conventional doors (which are made up of a single block that is pivoted to the top of the respective shell).

With respect to what occurs in conventional agricultural machines, this makes it possible to cope with minor resistance to the rotation, during the transition from the first to the second configuration, and vice versa, and consequently to maintain faster rotation speeds, thus shortening the overall cycle time and thus already achieving the set aim.

In particular, the shell 2a has at the front, with respect to the advancement direction, an access port 9a, for the introduction of the agricultural products into the chamber 3.

The access port 9a is facing toward the pick-up drum 4 and the conveying elements: thus, while the machine 1 is moving along the swath of cut material, towed by the respective tractor (which therefore defines the aforementioned advancement direction), it progressively accumulates the agricultural products gathered from the ground in the chamber 3, for forming the bale A.

Furthermore, at the opposite end with respect to the access port 9a and thus at the rear, with respect to the advancement direction, the shell 2a has an outlet 9b, in order to allow the egress of the bale A that has just been formed, which is closed by the doors 7, 8 in the first configuration.

It should be noted that the shell 2a can be substantially cylindrical, or spherical, or parallelepiped, or be any other shape structure, while remaining within the scope of protection claimed herein.

The first door 7 can also take any form, according to specific requirements; moreover, with reference to the preferred embodiment, which is illustrated in the accompanying figures for the purposes of non-limiting example of application of the invention, the first door 7 is constituted substantially by a first flap, provided with an opening 7a.

As is clearly shown in Figures 1 and 2, the first flap is arranged so that the opening 7a is directed toward the outlet 9b (and substantially placed in contact with it) at the first configuration; furthermore, the first pivoting axis B is arranged just proximate to an edge of the opening 7a.

In addition, the first door 7 (the first flap) can move from the first configuration to the second configuration: in the second configuration the first flap is raised by at least one drive unit (an oil-hydraulic piston, a hydraulic piston, etc., which are thus responsible for the transition from the first to the second configuration).

Thus, in such second configuration, the first door 7 allows the egress of the bale A through the outlet 9b.

In turn, and with further reference to the accompanying figures, the second door 8 is constituted substantially by a second flap, which thus cooperates with the first flap in order to completely close the outlet 9b in the first configuration.

In fact, the opening 7a of the first flap is smaller than that of the outlet 9b of the shell 2a. The first door 7 thus only partially closes the outlet 9b and the chamber 3 and it is the second door 8 that completes the closure, in the first configuration.

Furthermore, during the transition from the first configuration to the second configuration, the second valve is made to rotate and is lifted by the first flap (by the first door 7), in order to allow the release of the bale A through the outlet 9b.

In particular, it should be noted that while the first door 7 moves from the first configuration to the second configuration, and vice versa, the second door 8 oscillates about the above mentioned second pivoting axis C, which is substantially arranged at the top of the shell 2a.

Conveniently, the agricultural machine 1 comprises at least one belt 10 with variable trim, which is wound around at least one plurality of fixed rollers 11a, 11b, 11c and at least one respective adjustment roller 12: the belt 10 can thus entrain and compress the agricultural products that are introduced into the chamber 3 through the access port 9a, and form the bale A.

In particular, the fixed rollers 11a, 11b, 11c are arranged substantially along the perimeter of the chamber 3, at least in the first configuration, and are anchored respectively to the shell 2a (the fixed rollers 11a), to the first door 7 (the fixed rollers 11b) and to the second door 8 (the fixed rollers 11c).

The adjustment roller 12 on the other hand is free to move as a consequence of the progressive formation of the bale A, so as to allow the variation of the trim of the belt 10 and thus ensure that the optimal tension is maintained around the bale A being formed (thanks to the belt 10 which adapts to the progressively increasing size of the bale A while still maintaining a partial pressure thereupon).

More specifically, the agricultural machine 1 according to the invention comprises a supporting apparatus 13 for supporting a pair of adjustment rollers 12. The supporting apparatus 13 is rotatably coupled to the shell 2a, in order to allow the adjustment rollers 12 to move freely, as a consequence of the progressive formation of the bale A, thus allowing the variation of the trim of the belt 10 and so keeping the tension optimal around the bale A being formed, so that the latter will have the necessary compaction.

Even more specifically, the supporting apparatus 13 comprises at least one supporting arm 14 for supporting the adjustment rollers 12.

At one of its ends, the supporting arm 14 is pivoted idle to the shell 2a about a rotation axis D, which is parallel to the pivoting axes B and C.

In this manner, during the formation cycle of the bale A and at least when the doors 7, 8 are arranged in the first configuration, the arm 14 is in fact pushed to make it rotate, by virtue of the variation in trim of the belt 10 as a consequence of the progressive formation of the bale A and of the free movement of the adjustment rollers 12, from at least one first angular position to at least one second angular position. The first angular position (in which the arm 14 is shown in Figure 1), corresponds to the start of the formation cycle of the bale A, while the second angular position (in which the arm 14 is for example shown in Figure 2) corresponds to the complete formation of the bale A.

So in fact, in the first position the arm 14 is rotated toward the shell 2a and the adjustment rollers 12 are in fact positioned inside the latter.

With the accumulation of agricultural products inside the chamber 3, the bale A that is progressively being formed pushes the belt 10, which can change its trim in order to adapt to the increasing size of the bale A thus forcing the movement of the adjustment rollers 12, which are supported by the arm 14, which for this purpose is articulated idle to the shell 2a (in order to be able to rotate passively as the diameter of the bale A increases).

As can be seen from Figure 2 for example, in the second position the adjustment rollers 12 are contiguous with two fixed rollers 11c, which are anchored to the second door 8.

Moreover, it should be noted that the specific arrangement assumed by the arm 14 (with respect to the chassis and to the shell 2a) at the second angular position can vary, and with it the arrangement of the moving components that are associated with it (while remaining within the scope of protection claimed herein), as a function of the specific dimensions of the bale A that it is intended to form (and subsequently discharge).

Furthermore, as can also be seen from the comparison in the accompanying Figures 2 and 3, during the transition from the first configuration to the second configuration the arm 14 can be kept immobile at the second angular position or, at least, be kept in the neighborhood of the second angular position (thus allowing it only small oscillations, of a few degrees, about the latter).

The placement obtained by the arm 14 at the second angular position is undoubtedly advantageous: in fact, by keeping the arm 14 at least in the neighborhood of the second angular position (and conveniently choosing the extent of the small oscillations permitted), respective facing flaps 10a, 10b of the belt 10, which can move in opposite directions, are conveniently spaced apart in order to prevent mutual contact. In more detail, in the second angular position (or in any case in a neighborhood thereof) the arm 14 is sufficiently raised to maintain a safety distance between a first flap 10a of the belt 10, which presses from above on the bale A (and which in fact, with respect to the accompanying Figure 2, moves to the right together with the bale A itself) and a second flap 10b of the belt 10, which is above such first flap 10a, and which, interposed between one of the fixed rollers 11a and one of the adjustment rollers 12, with respect to the accompanying Figure 2, moves to the left.

Such safety distance guards against the danger of contact and interference between the above mentioned two flaps 10a, 10b of the belt 10, thus ensuring the optimal operation.

The oscillations that the arm 14 is allowed to make during the transition from the first configuration to the second configuration (depending on the size of the components involved and on the other design choices relating to such components) can thus cause a minimal lowering, with respect to the arrangement shown for example in Figure 2, in such a way as to never bring the flaps 10a, 10b into contact.

Positively, and precisely in order to maintain the correct tension of the belt 10 (which in turn ensures the optimal compression of the agricultural products during the formation of the bale A, and thus the desired density of the latter), the agricultural machine 1 comprises an element 15 for contrasting the free rotation of the arm 14, during the transition from the first position to the second position.

More specifically, in the embodiment proposed in the accompanying figures by way of non-limiting example, the contrasting element 15 (which optionally can also be designed to drive the transition from the second position to the first position) comprises a stem 16 that is fixed at a free end portion thereof to a crank 17, which in turn is integral with the arm 14.

At the opposite end, the stem 16 is able to slide within a hydraulic cylinder 18, which is fixed to the chassis.

The resistance offered by the cylinder 18 to the sliding of the stem 16 thus also produces the desired contrast to the free rotation of the arm 14, which is associated with the stem 16 through the crank 17.

As mentioned previously, in a possible embodiment of the agricultural machine 1 according to the invention, the contrasting element 15 also has the function of actively driving the transition of the arm 14 from the second angular position to the first angular position.

Moreover, in the preferred embodiment, as can also be seen from the accompanying figures, the machine 1 for this purpose comprises a spring 19, which is interposed between the shell 2a and the crank 17 (which as has been seen is integral with the arm 14).

Thanks to such implementation choice in fact, the elastic reaction of the spring 19 determines the automatic return of the arm 14 from the second position to the first position, following the discharge of the bale A (without thus having to provide a specific drive, as required by the contrasting element 15, in order to make it perform such a function).

It should likewise be emphasized that the peculiar arrangement of the rollers 11a, 11b, 11c, 12 and the choice to use an arm 14 of the type described above, makes it possible to maintain the latter in the second angular position (or in its neighborhood) even during the transition from the first configuration to the second configuration, and thus during the discharging of the bale A (in fact, it should be noted that in Figure 3, which shows the doors 7, 8 in the second configuration, the arm 14 is in the same arrangement as in Figure 2, i.e. in the second angular position).

Furthermore, it should be noted that if the arm 14 is kept immobile during the transition from the first configuration to the second configuration, or at least the permitted oscillations are only those that from the second angular position tend to return the arm 14 toward the first angular position, or vice versa, then the stem 16 is consequently also kept immobile, or at least it is prevented from making dangerous overstrokes, which would be due to a further raising of the arm 14.

It should furthermore be noted that the specific choice of the second angular position of the arm 14 and of the adjustment rollers 12, which makes it possible to achieve the beneficial effects mentioned above, is only one of the many configurations that can be adopted while still remaining within the scope of protection claimed herein. According to specific requirements, and/or in light of the arrangement deemed most convenient for the discharge of the bale A (which in turn depends on the size of the latter that it is desired to obtain), arms 14 can be provided of different shape and size, and/or different arrangements can be provided of the pivoting axes B, C, the rotation axis D and/or the rollers 11a, 11b, 11c, 12, in such a way as to still guard against the danger of interference between the various flaps 10a, 10b of the belt 10 (during the discharge of the bale A), or of overstrokes of the stem 16, as described above, while at the same time ensuring the correct maintenance of the tension of the belt 10 during the formation of the bale A.

The operation of the agricultural machine according to the invention is the following.

As previously noted, either independently or thanks to a tractor the agricultural machine 1 is able to move along a swath of cut material, in order to retrieve it from the ground.

After being gathered, the products are conveyed toward the chamber 3, where, thanks to the action of the belt 10, their compaction and their entrainment are carried out, so as to progressively form a cylindrical bale A.

At the end of the formation process, the bale A can be discharged onto the ground by acting on the first door 7 (which pulls the second door 8 in rotation), in order to bring the closing apparatus 2b from the first configuration to the second.

During the movement of the machine 1 in fact, and the formation of the bale A, the chamber 3 is delimited by the shell 2a (which is integral with the chassis of the machine 1) and by the closing apparatus 2b (which is thus arranged in its first configuration and which, as has been seen, comprises the first door 7 and the second door 8). This naturally prevents the progressively accumulated agricultural products, and the still only partially formed bale A, from exiting the chamber 3 prematurely and, at the same time, ensures a correct tensioning of the belts 10.

In more detail, in the preferred embodiment, and as can be seen from the accompanying figures, in the first configuration the first door 7 and the second door 8 completely close the opening 7a by acting as a single closure element (and substituting the single closure element present in conventional balers).

Moreover, it should be noted that the first door 7 and the second door 8 also have the task of supporting (together with the shell 2a) the rollers 11a, 11b 11c and 12, and thus, in the first configuration, of enabling the normal movement of the belt 10 for the formation of the bale A.

Differently from conventional closing elements, which are pivoted to the respective shell at its top, in the agricultural machine 1 according to the invention the first pivoting axis B of the first door 7 is arranged lower down (at an intermediate vertical height).

Thus, when the first door 7 rotates about its own pivoting axis B, pushing the second door 8 in rotation, the moment of inertia is very low, with evident beneficial effects and enabling the discharging of the bale A in a practical and easy manner.

In fact, the stresses and forces to which the closing apparatus 2b is subjected are certainly greatly reduced (with respect to conventional machines), and this makes it possible to keep its rotation speed higher, both during the raising (from the first configuration to the second configuration) and during the subsequent descent (from the second configuration to the first configuration, in order to restore the starting conditions of the cycle).

The overall cycle time, necessary for the formation and discharging of the bale A onto the ground, is thus advantageously contained, and is certainly less than that obtainable with conventional solutions.

Furthermore, with respect to conventional solutions, the overall space occupation of the machine 1 according to the invention is reduced under all working conditions. In fact, the first door 7 (which is articulated to the shell 2a at a first pivoting axis B distanced from the top of the shell 2a and is designed to only partially close the outlet 9b) is shorter than conventional closing elements, which have to ensure the closure of the entire corresponding outlet.

Hence, while the doors 7, 8 rotate and are raised, the longitudinal space occupation is low, thus ensuring greater maneuverability of the agricultural machine 1 according to the invention, and reducing the risk of exceeding the limits imposed on traffic on urban and suburban roads, in particular when the chassis supporting the shell 2a is coupled with a bale-wrapper.

It is known in fact that sometimes the chassis of conventional balers can be coupled at the rear to bale-wrapper, which is designed to wrap the bale before it is finally discharged onto the ground.

Thanks to the contained space occupation of the first door 7 during its lifting, the chassis of the agricultural machine 1 according to the invention can be effectively coupled to the bale-wrapper, conventional or otherwise, which is kept proximate to the outlet 9b.

With respect to conventional agricultural machines provided with a rear bale-wrapper, the solution adopted in the agricultural machine 1 according to the invention makes it possible in fact to reduce the overall length and, especially, to shorten the stretch that the bale A has to travel in order to reach the bale-wrapper. Such result is undoubtedly highly useful, in that the lower space occupation makes it possible to keep within the size restrictions imposed by the highway code, and it makes it possible to impart contained thrusts to the bale A (with benefits in terms of safety, especially when the agricultural machine 1 is operating on terrain that is not perfectly flat) and to simplify the transfer itself.

Furthermore, it should be emphasized that during the transition from the first configuration to the second configuration, and vice versa (and thus during the step of discharging the bale A), the arm 14 is kept at least in the neighborhood of the second angular position, without therefore the need to resort to further elements to ensure the correct tension of the belt 10 during such step, and still achieving the many other benefits described in the preceding pages.

In practice it has been found that the agricultural machine according to the invention fully achieves the set aim, in that the use of a closing apparatus which comprises a first door and a second door, which are articulated to the shell about respective pivoting axes that are mutually parallel, and which cooperate with the shell in a first configuration for the delimitation and closure of the chamber, with the ability to be brought to a second configuration in which they are rotated, makes it possible to provide an agricultural machine that ensures a practical and easy discharge of the bale onto the ground.

The invention, thus conceived, is susceptible of numerous modifications and variations, all of which are within the scope of the appended claims. Moreover, all the details may be substituted by other, technically equivalent elements.

In the embodiments illustrated, individual characteristics shown in relation to specific examples may in reality be interchanged with other, different characteristics, existing in other embodiments.

In practice, the materials employed, as well as the dimensions, may be any according to requirements and to the state of the art.

Where technical features mentioned in any claim are followed by reference signs, those reference signs have been included for the sole purpose of increasing the intelligibility of the claims and accordingly, such reference signs do not have any limiting effect on the interpretation of each element identified by way of example by such reference signs.

## Claims

1. An agricultural machine, comprising a chassis supporting an open shell (2a), which partially delimits a chamber (3) for accommodating and compressing agricultural products, of the type of grass, wheat, maize, hay, forage, and the like, for the formation of a bale (A) to be subsequently discharged onto the ground, said shell (2a) being associated with a closing apparatus (2b), which can move from a first configuration, in which it cooperates with said shell (2a) for the delimitation and closure of said chamber (3), to at least one second configuration, in which it allows the discharging of the bale (A) onto the ground, and vice versa, said closing apparatus (2b) comprising a first door (7), which is articulated about a first pivoting axis (B), and a second door (8), which is articulated to said shell (2a) about a second pivoting axis (C) and is substantially parallel to said first axis (B), in said first configuration both of said doors (7, 8) cooperating with said shell (2a) to delimit and close said chamber (3), in said second configuration both of said doors (7, 8) being rotated, in order to discharge the bale (A) onto the ground, said first pivoting axis (B) being arranged at a vertical height that is intermediate with respect to the vertical extension of said shell (2a), and is distanced from the top of said shell (2a) and of said chamber (3), said second door (8) being articulated to said shell (2a) about said second pivoting axis (C) that is arranged at the top of the shell (2a) and resting on top of said first door (7),
**characterized in that** said first pivoting axis (B) is arranged to articulate said first door (7) to said shell (2a) so that in said second configuration said first door (7) and said second door (8) are both rotated with respect to said shell (2a), with the second door (8) resting on top to said first door (7) being entrained in rotation by said first door (7).

2. The agricultural machine according to claim 1, **characterized in that** said shell (2a) has at the front, with respect to the advancement direction, an access port (9a), for introducing the agricultural products into said chamber (3), said shell (2a) having, at the rear, with respect to the advancement direction, an outlet (9b), for the egress of the formed bale (A), which is closed by said doors (7, 8) in said first configuration.

3. The agricultural machine according to claim 2, **characterized in that** said first door (7) is constituted substantially by a first flap, which is provided with an opening (7a) facing toward said outlet (9b) at said first configuration, and which can move from said first configuration to said second configuration, in which it is raised by at least one drive unit, in order to allow the egress of the bale (A) through said outlet (9b), said first pivoting axis (B) being arranged proximate to an edge of said opening (7a).

4. The agricultural machine according to claim 3, **characterized in that** said second door (8) is substantially constituted by a second flap, which cooperates with said first flap in order to completely close said outlet (9b) in said first configuration, during the transition from said first configuration to said second configuration said second flap being made to rotate and lifted by said first flap, in order to allow the release of the bale (A) through said outlet (9b).

5. The agricultural machine according to one or more of the preceding claims 2 to 4, **characterized in that** it comprises at least one belt (10) with variable trim, which is wound around at least one plurality of fixed rollers (11a, 11b, 11c) and around at least one respective adjustment roller (12), for the movement and compression of the agricultural products introduced into said chamber (3) through said access port (9a), and the formation of the bale (A), said fixed rollers (11a, 11b, 11c) being arranged substantially along the perimeter of said chamber (3), at least in said first configuration, and being anchored respectively to said shell (2a), to said first door (7) and to said second door (8), said at least one adjustment roller (12) being freely movable as a consequence of the progressive formation of the bale (A), in order to vary the trim of said belt (10) and keep the tension optimal around the bale (A) being formed.

6. The agricultural machine according to claim 5, **characterized in that** it comprises a supporting apparatus (13) for supporting a pair of said adjustment rollers (12), which is rotatably coupled to said shell (2a), for the free movement of said adjustment rollers (12) as a consequence of the progressive formation of the bale (A), in order to vary the trim of said belt (10) and keep the tension optimal around the bale (A) being formed.

7. The agricultural machine according to claim 6, **characterized in that** said supporting apparatus (13) comprises at least one supporting arm (14) for supporting said adjustment rollers (12), said supporting arm (14) being pivoted idle at one of its ends to said shell (2a) about a pivoting axis (D), which is parallel to said pivoting axes (B, C), during the formation cycle of the bale (A) and at least with said doors (7, 8) in said first configuration, said arm (14) being pushed to make it rotate, by virtue of the variation in trim of the belt (10) as a consequence of the progressive formation of the bale (A) and of the free movement of said adjustment rollers (12), from at least one first angular position, corresponding to the start of the formation cycle of the bale (A), to at least one second angular position, corresponding to the complete formation of the bale (A), during the transition from said first configuration to said second configuration said arm (14) being kept at least in the neighborhood of said second angular position, in said neighborhood of said second angular position respective facing flaps (10a, 10b) of said belt (10), which can move in opposite directions, being spaced apart in order to prevent mutual contact.

8. The agricultural machine according to claim 7, **characterized in that** it comprises an element for contrasting (15) the free rotation of said arm (14) during the transition from said first position to said second position, in order to maintain the correct tension for said belt (10) and the optimal compression of the agricultural products during the formation of the bale (A).

9. The agricultural machine according to claim 8, **characterized in that** said contrasting element (15) comprises a stem (16), which is fixed at a free end portion thereof to a crank (17) that is integral with said arm (14), said stem (16) being slideable, at the opposite end, within a hydraulic cylinder (18) that is fixed to said chassis.

10. The agricultural machine according to claim 9, **characterized in that** it comprises a spring (19), which is interposed between said shell (2a) and said crank (17), for the automatic return of said arm (14) from said second position to said first position, following the discharge of the bale (A), by virtue of the elastic reaction of said spring (19).

## Patentansprüche

1. Eine Landmaschine, die ein Fahrgestell umfasst, das eine offene Schale (2a) trägt, welche eine Kammer (3) zur Aufnahme und zur Kompression landwirtschaftlicher Produkte, von der Art von Gras, Weizen, Mais, Heu, Futter und dergleichen teilweise begrenzt, zur Bildung eines Ballens (A), der anschließend auf den Boden abgeladen werden soll, wobei die Schale (2a) mit einer Schließvorrichtung (2b) verbunden ist, die sich aus einer ersten Anordnung, in der sie mit der Schale (2a) zur Begrenzung und zum Verschließen der Kammer (3) zusammenwirkt, in mindestens eine zweite Anordnung bewegen kann, in welcher sie das Abladen des Ballens (A) auf den Boden ermöglicht, und umgekehrt, wobei die Schließvorrichtung (2b) eine erste Tür (7) umfasst, die gelenkig um eine erste Schwenkachse (B) gelagert ist, und eine zweite Tür (8), die um eine zweite Schwenkachse (C) gelenkig mit der Schale (2a) verbunden und im Wesentlichen parallel zu der ersten Achse (B) ist, wobei in der ersten Anordnung beide Türen (7, 8) mit der Schale (2a) zusammenwirken, um die Kammer (3) zu begrenzen und zu schließen, wobei in der zweiten Anordnung beide Türen (7, 8) gedreht werden, um den Ballen (A) auf dem Boden abzuladen, wobei die erste Schwenkachse (B) sich auf einer vertikalen Höhe befindet, die intermediär mit Bezug auf die vertikale Ausdehnung der Schale (2a) ist, und vom oberen Ende der Schale (2a) und der Kammer (3) beabstandet ist, wobei die zweite Tür (8) um die zweite Schwenkachse (C), die sich am oberen Ende der Schale (2a) befindet, gelenkig mit der Schale (2a) verbunden ist und auf der Oberseite der ersten Tür (7) aufliegt,
**dadurch gekennzeichnet, dass** die erste Schwenkachse (B) angeordnet ist, um die erste Tür (7) gelenkig mit der Schale (2a) zu verbinden, so dass in der zweiten Anordnung sowohl die erste Tür (7) als auch die zweite Tür (8) mit Bezug auf die Schale (2a) gedreht sind, wobei die zweite Tür (8), die auf der Oberseite der ersten Tür (7) aufliegt, in der Drehung durch die erste Tür (7) mitgezogen wird.

2. Die Landmaschine gemäß Anspruch 1, **dadurch gekennzeichnet, dass** die Schale (2a) an der Vorderseite, mit Bezug auf die Vorschubrichtung, eine Zugangsöffnung (9a) zum Hineingeben der landwirtschaftlichen Produkte in die Kammer (3) hat, wobei die Schale (2a) an der Rückseite, mit Bezug auf die Vorschubrichtung, einen Auslass (9b) für den Austritt des geformten Ballens (A) hat, der in der ersten Anordnung von den Türen (7, 8) verschlossen ist.

3. Die Landmaschine gemäß Anspruch 2, **dadurch gekennzeichnet, dass** die erste Tür (7) im Wesentlichen aus einer ersten Klappe besteht, die mit einer Öffnung (7a) versehen ist, welche in der ersten Anordnung dem Auslass (9b) zugewandt ist und die sich aus der ersten Anordnung in die zweite Anordnung bewegen kann, in welcher sie von mindestens einer Antriebseinheit angehoben wird, um den Austritt des Ballens (A) durch den Auslass (9b) zu ermöglichen, wobei die erste Schwenkachse (B) nahe einem Rand der Öffnung (7a) angeordnet ist.

4. Die Landmaschine gemäß Anspruch 3, **dadurch gekennzeichnet, dass** die zweite Tür (8) im Wesentlichen aus einer zweiten Klappe besteht, die mit der ersten Klappe zusammenwirkt, um den Auslass (9b) in der ersten Anordnung vollständig zu verschließen, wobei während des Übergangs von der ersten Anordnung in die zweite Anordnung die zweite Klappe von der ersten Klappe gedreht und angehoben wird, um den Austritt des Ballens (A) durch den Auslass (9b) zu ermöglichen.

5. Die Landmaschine gemäß einem oder mehreren der obigen Ansprüche 2 bis 4, **dadurch gekennzeichnet, dass** sie mindestens einen Riemen (10) mit veränderlicher Trimmung umfasst, der um mindestens eine Vielzahl fester Rollen (11a, 11b, 11c) und um mindestens eine entsprechende Justierrolle (12) gewunden wird, zum Bewegen und zur Kompression der landwirtschaftlichen Produkte, die durch die Zugangsöffnung (9a) in die Kammer (3) hineingeben werden, und zur Bildung des Ballens (A), wobei die festen Rollen (11a, 11b, 11c), zumindest in der ersten Anordnung, im Wesentlichen entlang dem Umfang der Kammer (3) angeordnet und an der Schale (2a), an der ersten Tür (7) beziehungsweise an der zweiten Tür (8) verankert sind, wobei die mindestens eine Justierrolle (12) infolge der fortschreitenden Bildung des Ballens (A) frei beweglich ist, um die Trimmung des Riemens (10) zu verändern und die Spannung um den geformten Ballen (A) herum optimal zu halten.

6. Die Landmaschine gemäß Anspruch 5, **dadurch gekennzeichnet, dass** sie eine Tragevorrichtung (13) zum Tragen eines Paares der Justierrollen (12) umfasst, die drehbar mit der Schale (2a) gekoppelt ist zur freien Bewegung der Justierrollen (12) infolge der fortschreitenden Bildung des Ballens (A), um die Trimmung des Riemens (10) zu verändern und die Spannung um den geformten Ballen (A) optimal zu halten.

7. Die Landmaschine gemäß Anspruch 6, **dadurch gekennzeichnet, dass** die Tragvorrichtung (13) mindestens einen Tragarm (14) zum Tragen der Justierrollen (12) umfasst, wobei der Tragarm (14) um eine Schwenkachse (D), die parallel zu den Schwenkachsen (B, C) ist, an einem seiner Enden frei gelagert an der Schale (2a) befestigt ist, wobei während des Bildungszyklus des Ballens (A) und zumindest wenn die Türen (7, 8) sich in der ersten Anordnung befinden, der Arm (14) gedrückt wird, um ihn, durch die Veränderung der Trimmung des Riemens (10) infolge der fortschreitenden Bildung des Ballens (A) und infolge der freien Bewegung der Justierrollen (12), aus mindestens einer ersten Winkelposition, die dem Anfang des Bildungszyklus des Ballens (A) entspricht, in mindestens eine zweite Winkelposition drehen zu lassen, die der fertiggestellten Bildung des Ballens (A) entspricht, wobei während des Übergangs aus der ersten Anordnung in die zweite Anordnung der Arm (14) mindestens in der Nähe der zweiten Winkelposition gehalten wird, in der Nähe der zweiten Winkelposition entsprechende gegenüberliegende Flügel (10a, 10b) des Riemens (10), die sich in entgegengesetzte Richtungen bewegen können, beabstandet sind, um Kontakt miteinander zu vermeiden.

8. Die Landmaschine gemäß Anspruch 7, **dadurch gekennzeichnet, dass** sie ein Element (15) umfasst, um der freien Drehung des Arms (14) während des Übergangs aus der ersten Position in die zweite Position entgegenzuwirken, um die korrekte Spannung des Riemens (10) und die optimale Kompression der landwirtschaftlichen Produkte während der Bildung des Ballens (A) beizubehalten.

9. Die Landmaschine gemäß Anspruch 8, **dadurch gekennzeichnet, dass** das Kontrastelement (15) einen Schaft (16) umfasst, der an einem freien Endabschnitt desselben an einer Kurbel (17) befestigt ist, die integral mit dem Arm (14) ist, wobei der Schaft (16) am gegenüberliegenden Ende in einem Hydraulikzylinder (18) gleiten kann, der an dem Fahrgestell befestigt ist.

10. Die Landmaschine gemäß Anspruch 9, **dadurch gekennzeichnet, dass** sie eine Feder (19) umfasst, die zwischen der Schale (2a) und der Kurbel (17) angeordnet ist, für die automatische Rückkehr des Arms (14) aus der zweiten Position in die erste Position nach Abladen des Ballens (A) aufgrund der elastischen Reaktion der Feder (19).

## Revendications

1. Machine agricole, comportant un châssis supportant un carter ouvert (2a), qui délimite partiellement une chambre (3) pour recevoir et comprimer des produits agricoles, du type herbe, blé, maïs, foin, fourrage et analogue, pour la formation d'une balle (A) devant être ensuite déchargée sur le sol, ledit carter (2a) étant associé à un appareil de fermeture (2b), qui peut passer d'une première configuration, dans laquelle il coopère avec ledit carter (2a) pour la délimitation et la fermeture de ladite chambre (3), à au moins une seconde configuration, dans laquelle il permet le déchargement de la balle (A) sur le sol, et vice versa, ledit appareil de fermeture (2b) comportant une première trappe (7), qui est articulée autour d'un premier axe de pivotement (B), et une seconde trappe (8), qui est articulée sur ledit carter (2a) autour d'un second axe de pivotement (C) et est sensiblement parallèle audit premier axe (B), dans ladite première configuration, lesdites deux trappes (7, 8) coopérant avec ledit carter (2a) pour délimiter et fermer ladite chambre (3), dans ladite seconde configuration, lesdites deux trappes (7, 8) étant tournées, afin de décharger la balle (A) sur le sol, ledit premier axe de pivotement (B) étant agencé sur une hauteur verticale qui est intermédiaire par rapport à l'extension verticale dudit carter (2a), et est espacée du dessus dudit carter (2a) et de ladite chambre (3), ladite seconde trappe (8) étant articulée sur ledit carter (2a) autour dudit second axe de pivotement (C) qui est agencé sur le dessus du carter (2a) et en appui au-dessus de ladite première trappe (7),
**caractérisée en ce que** ledit premier axe de pivotement (B) est agencé pour articuler ladite première trappe (7) sur ledit carter (2a) de sorte que dans ladite seconde configuration, ladite première trappe (7) et ladite seconde trappe (8) tournent toutes deux par rapport audit carter (2a), avec la seconde trappe (8) en appui au-dessus de ladite première trappe (7) étant entraînée en rotation par ladite première trappe (7).

2. Machine agricole selon la revendication 1, **caractérisée en ce que** ledit carter (2a) a, à l'avant, par rapport à la direction d'avancement, un orifice d'accès (9a) pour introduire les produits agricoles dans ladite chambre (3), ledit carter (2a) ayant, à l'arrière, par rapport à la direction d'avancement, une sortie (9b), pour l'évacuation de la balle (A) formée, qui est fermée par lesdites trappes (7, 8) dans ladite première configuration.

3. Machine agricole selon la revendication 2, **caractérisée en ce que** ladite première trappe (7) est sensiblement constituée d'un premier volet, qui est pourvu d'une ouverture (7a) dirigée vers ladite sortie (9b) dans ladite première configuration, et qui peut passer de ladite première configuration à ladite seconde configuration, dans laquelle il est soulevé par au moins une unité d'entraînement, afin de permettre l'évacuation de la balle (A) à travers ladite sortie (9b), ledit premier axe de pivotement (B) étant agencé à proximité d'un bord de ladite ouverture (7a).

4. Machine agricole selon la revendication 3, **caractérisée en ce que** ladite seconde trappe (8) est sensiblement constituée d'un second volet, qui coopère avec ledit premier volet afin de fermer entièrement ladite sortie (9b) dans ladite première configuration pendant la transition de ladite première configuration à ladite seconde configuration ledit second volet étant amené à tourner et être levé par ledit premier volet, afin de permettre la libération de la balle (A) à travers ladite sortie (9b).

5. Machine agricole selon une ou plusieurs des revendications 2 à 4 précédentes, **caractérisée en ce qu'**elle comporte au moins une bande (10) avec une assiette variable, qui est enroulé autour d'au moins une pluralité de rouleaux fixes (11a, 11b, 11c) et autour d'au moins un rouleau de réglage (12) respectif, pour le déplacement et la compression des produits agricoles introduits dans ladite chambre (3) à travers ledit orifice d'accès (9a), et la formation de la balle (A), lesdits rouleaux fixes (11a, 11b, 11c) étant agencés sensiblement le long du périmètre de ladite chambre (3), au moins dans ladite première configuration, et étant respectivement ancrés audit carter (2a), à ladite première trappe (7) et à ladite seconde trappe (8), ledit au moins un rouleau de réglage (12) étant librement mobile en conséquence de la formation progressive de la balle (A), afin de faire varier l'assiette de ladite bande (10) et garder la tension optimale autour de la balle (A) en cours de formation.

6. Machine agricole selon la revendication 5, **caractérisée en ce qu'**elle comporte un appareil de support (13) pour supporter une paire desdits rouleaux de réglage (12), qui est couplé en rotation audit carter (2a), pour le mouvement libre desdits rouleaux de réglage (12) en conséquence de la formation progressive de la balle (A), afin de faire varier l'assiette de ladite bande (10) et garder la tension optimale autour de la balle (A) en cours de formation.

7. Machine agricole selon la revendication 6, **caractérisée en ce que** ledit appareil de support (13) comporte au moins un bras de support (14) pour supporter lesdits rouleaux de réglage (12), ledit bras de support (14) pivotant librement à l'une de ses extrémités sur ledit carter (2a) autour d'un axe de pivotement (D), qui est parallèle auxdits axas de pivotement (B, C), pendant le cycle de formation de la balle (A) et au moins avec lesdites trappes (7, 8) dans ladite première configuration, ledit bras (14) étant poussé pour l'amener à tourner, du fait de la variation de l'assiette de la bande (10) en conséquence de la formation progressive de la balle (A) et du mouvement libre desdits rouleaux de réglage (12), à partir d'au moins une première position angulaire, correspondant au début du cycle de formation de la balle (A), jusqu'à au moins une seconde position angulaire, correspondant à la formation complète de la balle (A) pendant la transition de ladite première configuration à ladite seconde configuration, ledit bras (14) étant maintenu au moins au voisinage de ladite seconde position angulaire, dans ledit voisinage de ladite seconde position angulaire des volets opposés (10a, 10b) respectifs de ladite bande (10), qui peuvent se déplacer dans des directions opposées, en étant espacés l'un de l'autre afin d'empêcher un contact mutuel.

8. Machine agricole selon la revendication 7, **caractérisée en ce qu'**elle comporte un élément pour s'opposer (15) à la rotation libre dudit bras (14) pendant la transition de ladite première position à ladite seconde position, afin de maintenir la tension correcte pour ladite bande (10) et la compression optimale des produits agricoles pendant la formation de la balle (A).

9. Machine agricole selon la revendication 8, **caractérisée en ce que** ledit élément d'opposition (15) comporte une tige (16), qui est fixée à une partie d'extrémité libre de celle-ci à une manivelle (17) qui est solidaire dudit bras (14), ladite tige (16) étant coulissable, à l'extrémité opposée, à l'intérieur d'un vérin hydraulique (18) qui est fixé audit châssis.

10. Machine agricole selon la revendication 9, **caractérisée en ce qu'**elle comporte un ressort (19), qui est intercalé entre ledit carter (2a) et ladite manivelle (17), pour le retour automatique dudit bras (14) de ladite seconde position à ladite première position, après le déchargement de la balle (A), du fait de la réaction élastique dudit ressort (19).
